# EUROPÄISCHE PATENTSCHRIFT

(11) **EP 1 153 222 B1**
(45) Veröffentlichungstag und Bekanntmachung des Hinweises auf die Patenterteilung: **07.04.2004**
(21) Anmeldenummer: 00983329.4
(22) Anmeldetag: 14.12.2000
(51) Int. Cl.: F16B 25/00, F16B 33/02

(54) **SELBSTFURCHENDE SCHRAUBE**
SELF-THREADING SCREW
VIS AUTOTARAUDEUSE

(30) Priorität: 14.12.1999 DE 19960287
(43) Veröffentlichungstag der Anmeldung: 14.11.2001
(73) Patentinhaber: EJOT VERBINDUNGSTECHNIK GmbH & Co. KG, 57334 Bad Laasphe (DE)
(72) Erfinder: BIRKELBACH, Ralf, 35041 Marburg (DE)
(74) Vertreter: Bardehle, Heinz, Dipl.-Ing.
(86) Internationale Anmeldenummer: PCT/EP2000/012741
(87) Internationale Veröffentlichungsnummer: WO 2001/044672

(56) Entgegenhaltungen:
- EP-A- 0 589 398
- DE-A- 19 732 652
- DE-C- 3 926 000
- DE-U- 9 302 186
- GB-A- 211 257
- US-A- 4 576 534

## Beschreibung

Die Erfindung bezieht sich auf eine selbstfurchende Schraube mit gewalzten Gewindegängen, bei der Lastflanke und Rückflanke zueinander derart unsymmetrisch verlaufen, dass die Lastflanke gerade zum Gewindegrund verläuft und die Rückflanke von der Gewindespitze zunächst gerade und von etwa 1/3 ihrer Höhe über einen Knick in eine gerade Abwinkelung mit einem Winkel (α) übergeht.

Eine derartige Schraube ist in der Figur 3 der DE A 197 32 652 dargestellt und in der zugehörigen Beschreibung erläutert. Bei dieser Schraube handelt es sich darum, die Gewindegänge so zu gestalten, dass das beim Eindrehen der Schraube in Kunststoff verdrängte Kunststoffmaterial in besonders günstiger Weise abfließen kann. Aus diesem Grunde weist die Schraube gemäß Figur 3 dieser Druckschrift folgende Merkmale auf: Lastflanke und Rückflanke verlaufen unsymmetrisch zueinander, und zwar dadurch, dass die Lastflanke gerade zum Gewindegrund verläuft, während die Rückflanke von der Gewindespitze zunächst gerade und von etwa 1/3 ihrer Höhe über einen Knick in eine gerade Abwinkelung übergeht, wobei dieser Knick nach innen gerichtet ist. Hierdurch soll der Freiraum für verdrängtes Kunststoffmaterial entsprechend vergrößert werden. Im äußeren Bereich der Gewindegänge, also im Bereich von Lastflanke und Rückflanke, liegt eine Gestaltung wie bei üblichen Gewinden vor, nämlich symmetrisch zueinander mit einer Winkelhalbierenden, die senkrecht zur Gewindeachse verläuft. Wegen der nach innen gerichteten Abknickung der Rückflanke ergibt sich zwischen der Lastflanke und der Abknickung eine Winkelhalbierende, die vom Schraubenkopf weg gerichtet ist. Bei dieser Schraube wirkt sich die nach innen gerichtete Abknickung der Rückflanke darum bei besonders hohen auf die Schraube wirkenden Zugkräften ungünstig aus, da Zugkräfte die Tendenz haben, die einzelnen Gewindegänge vom Schraubenkopf weg abzuknicken.

Der Erfindung liegt die Aufgabe zugrunde, die eingangs beschriebene Schraube so zu gestalten, dass ihre Herstellung durch Gewindewalzen verbessert und darüber hinaus ihre Belastbarkeit und Haltekraft vergrößert wird. Die geometrische Gestaltung der Schraube ist dabei so zu wählen, dass ein optimiertes Einschraubverhalten in dem jeweiligen metallischen Werkstoff erreicht wird. Erfindungsgemäß geschieht dies dadurch, dass der Winkel (α) der Abwinkelung größer als der zur Senkrechten (5) gemessene Winkel (δ) der Rückflanke (9) ist und zwischen 30° und 50° liegt und die Winkelhalbierende (15) des durch Lastflanke (8) und Rückflanke (9) gebildeten Gewindeganges (4) eine vom Schraubenkopf (1) weg gerichtete Schräglage zur Senkrechten (5) zur Schraubenachse (6) aufweist, wobei das Durchmesserverhältnis von Gewinde-Kerndurchmesser (K) zu Gewinde- Außendurchmesser (D) größer als 0,7 und das Verhältnis von Gewindesteigung (P) zu Gewinde-Außendurchmesser (D) kleiner als 0,25 ist.

Aufgrund des von den Gewindespitzen zum Gewindegrund im wesentlichen geradlinigen Verlaufs im Bereich der Lastflanke und auch der einen Knick enthaltenden Rückflanke lässt sich die Schraube mit Walzbacken walzen, deren Rillen im Querschnitt jeweils einen entsprechenden geradlinigen Verlauf aufweisen, was für die Herstellung der Walzbacken einen erheblichen Vorteil gegenüber in diesem Bereich abgerundeten Walzbacken darstellt. Darüber hinaus hat sich gezeigt, dass die mit einem Durchmesserverhältnis von Gewinde-Kerndurchmesser zu Gewinde-Außendurchmesser von größer als 0,7 gegebene Dimensionierung zu einer Verkürzung der Gewindegänge führt, so dass diese nur über eine relativ geringe radiale Höhe Biegebelastungen beim Anziehen der Schraube und bei Belastung durch das betreffende Bauteil ausgesetzt sind, die zudem noch dadurch gut aufgefangen werden, dass die Abwinkelung, deren Winkel zur Senkrechten größer ist als der betreffende Winkel der Rückflanke, sich über den Bereich erstreckt, der eine starke Abstützung der Gewindegänge gegen Abknicken erfordert. Dabei lässt der erst bei 1/3 der Höhe der Gewindegänge liegende Knick ausreichend Raum im äußeren Bereich der Gewindegänge für das Abfließen des verdrängten Materials des betreffenden Bauteils, so dass dieses Abfließen nicht behindert wird.

Auf der Lastflanke der Gewindegänge ergibt sich beim Anziehen der Schraube aufgrund von deren durchgehend geraden schrägen Verlauf eine auf diese Flanke auftreffende Kraft, die wegen der Schräglage der Lastflanke entsprechend schräg in die Schraube und damit deren Kern eingeleitet wird, der aufgrund seines relativ großen Durchmessers in der Lage ist, hohe Kräfte aufzunehmen. Umgekehrt verläuft der Druck im Material des Bauteils ebenfalls in Schrägrichtung, d.h. in das die Einschraubstelle umgebende Material, wo dieser Druck ohne weiteres aufgefangen werden kann. Der gradlinig schräge Verlauf der Lastflanke ermöglicht dabei eine gleichmäßige Druckverteilung über die gesamte Höhe der Gewindelastflanke, so daß hierdurch immer eine maximale Kontaktfläche und maximale Reibung beim Anziehen der Schraube ermöglicht wird, ohne das Material zu schädigen. Aufgrund des Verhältnisses von Gewindesteigung zu Gewindeaußendurchmesser, das kleiner als 0,25 gewählt ist, ergibt sich ein Gewinde mit eng zueinander liegenden Gewindegängen, so daß über eine bestimmte Länge im betreffenden Bauteil eine relativ große Zahl von Gewindegängen verankert wird. Dies hat entsprechend hohe Ausreiß- und Haltekräfte zur Folge.

Vorteilhaft wird der Winkel zwischen der Winkelhalbierenden (zwischen Lastflanke und Rückflanke) und der Senkrechten zur Schraubenachse so gewählt, daß er im Bereich zwischen 5° und 15° liegt. Die sich hieraus ergebende Schräglage der Gewindegänge führt auch bei kleinen Flankenwinkeln (gemessen zwischen Lastflanke und Rückflanke) zu einer ausreichenden Schräglage der Lastflanke mit der Folge einer günstigen Einleitung von auf die Lastflanke wirkenden Kräften in den Kern der Schraube. Die Schräglage und der gerade Verlauf der Lastflanke sind also für die Reibung der eingedrehten Schraube gegenüber dem Bauteil verantwortlich, die ausreichend groß sein muß, damit das Überdrehmoment, bei dem die Schraube das Gewinde im Bauteil ausreißen würde, nicht ohne weiteres erreicht wird.

Die erfindungsgemäße Schraube ist besonders geeignet, in Stahl eingedreht zu werden, wozu die Schraube natürlich selbst ebenfalls aus Stahl besteht. In diesem Fall hat sich ein Flankenwinkel zwischen Last- und Rückflanke von 38° bis 48° als günstig ergeben, da hierdurch ein optimales Verhältnis von verdrängtem Volumen und Beanspruchbarkeit des Werkstoffes geschaffen wird. Wird die erfindungsgemäße Schraube aus Stahl in Leichtmetall eingedreht, so ist in diesem Falle ein Flankenwinkel zwischen Last- und Rückflanke von 32° bis 42° zweckmäßig.

Es ist auch möglich, die Schraube aus Aluminium, insbesondere aus einer harten Aluminiumlegierung, auszubilden, die dann ebenfalls zum Eindrehen in Leichtmetall geeignet ist. In diesem Fall wählt man den Flankenwinkel zwischen Lastund Rückflanke zweckmäßig zwischen 58° und 68°.

Eine besonders günstige Schräglage der Winkelhalbierenden ergibt sich dann, wenn diese mit etwa 1/6 des Flankenwinkels zwischen Last- und Rückflanke gewählt wird.

In den Figuren sind Ausführungsbeispiele der Erfindung dargestellt. Es zeigen
- Fig. 1: eine Schraube mit Schraubenkopf und selbstfurchendem Gewinde,
- Fig. 2: einen Schnitt durch einen Teil des Gewindes aus Fig. 1 in vergrößerter Darstellung,
- Fig. 3: einen Schnitt durch das Gewinde ähnlich demjenigen gemäß Fig. 2 mit einem Flankenwinkel von 45°,
- Fig. 4: einen ähnlichen Schnittwinkel eines Gewindes mit einem Flankenwinkel von 33 °,
- Fig. 5: einen Schnitt durch ein Gewinde mit einem Flankenwinkel von 60°.

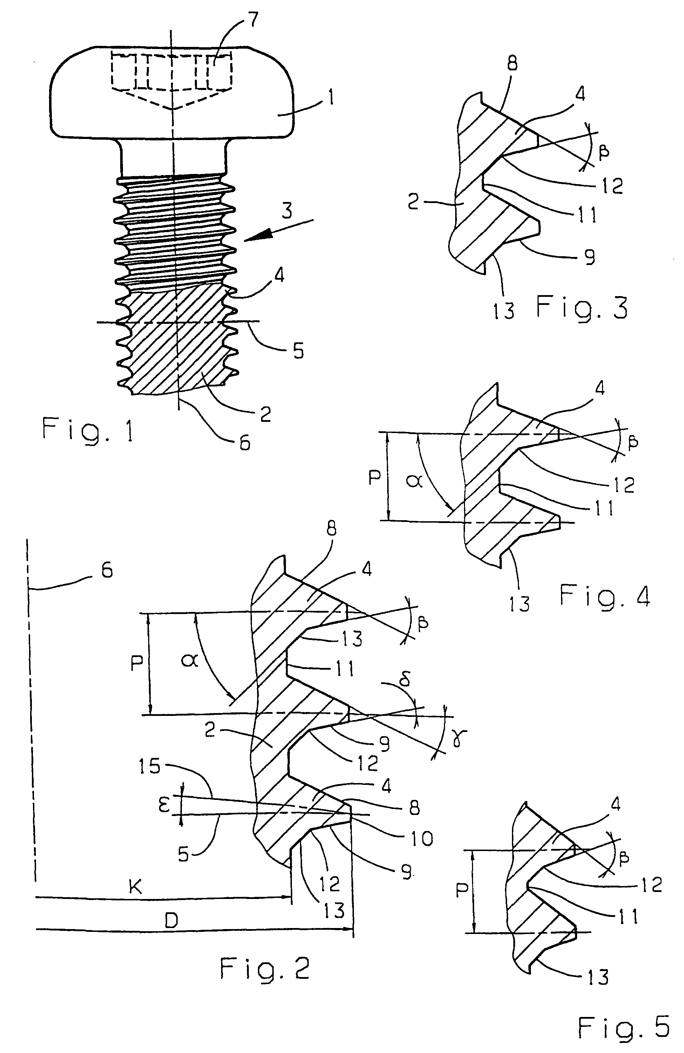

In der Fig. 1 ist eine selbstfurchende Schraube mit dem Schraubenkopf 1 und dem Kern 2 dargestellt, auf den das Gewinde 3 aufgewalzt ist. Es handelt sich dabei um ein eingängiges Gewinde mit den einzelnen Gewindegängen 4, die eine vom Schraubenkopf 1 weggerichtete Schräglage zur Senkrechten 5 in bezug auf die Schraubenachse 6 aufweisen. In den Schraubenkopf 1 ist ein Schraubenantrieb 7 eingeprägt, bei dem es sich um eine bekannte Gestaltung handelt.

In der Fig. 2 ist das Gewinde 3 gemäß Fig. 1 in vergrößerter Darstellung im Schnitt gezeigt. Die einzelnen Gewindegänge 4 weisen die zu dem Schraubenkopf 1 weisende Lastflanke 8 und die gegenüberliegende Rückflanke 9 auf. Die Lastflanke 8 erstreckt sich von der Gewindespitze 10 gerade zum Gewindegrund 11. Die der Lastflanke 8 gegenüberliegende Rückflanke 9 geht über den Knick 12 in die Abwinkelung 13 über. Die Lastflanke 8 mit ihrem Flankenwinkel γ und die Rückflanke 9 mit ihrem Flankenwinkel δ, jeweils bezogen auf die Senkrechte 5, bilden den Flankenwinkel β, der hier 39° beträgt. Die Winkelhalbierende 15 des Flankenwinkels β, die wesentlich die Schräglage der Gewindegänge 4 bestimmt, bildet zu der Senkrechten 5 den Winkel ε. Die Abwinkelung 13 verläuft in bezug auf die Senkrechte 5 zur Schraubenachse 6 in einem Winkel α, der größer ist als der Rückflankenwinkel δ gemessen zwischen der Senkrechten 5 und der Rückflanke 9.

In die Fig. 2 ist noch die Steigung P (Abstand zwischen zwei benachbarten Gewindegängen 4), der Außendurchmesser D des Gewindes und der Kemdurchmesser K des Gewindes eingetragen. Bei dem in Fig. 2 dargestellten Gewinde beträgt das Durchmesserverhältnis von Gewindekerndurchmesser K zu Gewindeaußendurchmesser D 0,8, das Verhältnis von Gewindesteigung P zu Gewindeaußendurchmesser D beträgt 0,17. Der Flankenwinkel β beträgt hier 39°.

In den Fig. 3 bis 5 sind Varianten des Gewindes gemäß Fig. 2 dargestellt. Bei dem Gewinde gemäß Fig. 3 beträgt der Flankenwinkel β 45°, bei dem Gewinde gemäß Fig. 4 beträgt der Flankenwinkel β 33° und bei dem Gewinde gemäß Fig. 5 der Flankenwinkel β 60°.

Bezüglich der Gestaltung der Gewinde gemäß den Fig. 2 bis 4 sei noch darauf hingewiesen, daß der Gewindegrund 11 jeweils zylindrisch verläuft.

Es sei noch darauf hingewiesen, daß die in den Fig. 2 bis 5 in vergrößerter Darstellung wiedergegebenen Gewindeausführungsbeispiele Bereiche von jeweils günstigen Flankenwinkeln β darstellen, die für bestimmte Anwendungsfälle, wie oben im einzelnen dargelegt, Verwendung finden können.

Der Knick 12 im Bereich der Rückflanke 9 liegt bei dem Gewinde gemäß Fig. 2 bis 5 bei 1/3 der Höhe der Gewindegänge 4, wobei diese Höhe vom Gewindegrund 11 in Richtung Gewindespitze 10 gemessen ist. Die vom Knick 12 ausgehende Abwinkelung 13 verläuft beim Gewinde gemäß den Fig. 2 bis 5 jeweils in dem Winkel α (siehe Fig. 2), der 45° beträgt.

## Patentansprüche

1. Selbstfurchende Schraube mit gewalzten Gewindegängen (4), bei der Lastflanke (8) und Rückflanke (9) zueinander derart unsymmetrisch verlaufen, dass die Lastflanke (8) gerade zum Gewindegrund (11) verläuft und die Rückflanke (9) von der Gewindespitze (10) zunächst gerade und von etwa 1/3 ihrer Höhe über einen Knick (12) in eine gerade Abwinkelung (13) mit einem Winkel (α) übergeht, **dadurch gekennzeichnet, dass** der Winkel (α) der Abwinkelung größer als der zur Senkrechten (5) gemessene Winkel (δ) der Rückflanke (9) ist und zwischen 30° und 50° liegt und die Winkelhalbierende (15) des durch Lastflanke (8) und Rückflanke (9) gebildeten Gewindeganges (4) eine vom Schraubenkopf (1) weg gerichtete Schräglage zur Senkrechten (5) zur Schraubenachse (6) aufweist, wobei das Durchmesserverhältnis von Gewinde-Kerndurchmesser (K) zu Gewinde- Außendurchmesser (D) größer als 0,7 und das Verhältnis von Gewindesteigung (P) zu Gewinde-Außendurchmesser (D) kleiner als 0,25 ist.

2. Schraube nach Anspruch 1, **dadurch gekennzeichnet, daß** die Schräglage (ε) der Winkelhalbierenden (15) im Bereich zwischen 5° und 15° liegt.

3. Schraube nach Anspruch 2, **dadurch gekennzeichnet, daß** die Schräglage (ε) der Winkelhalbierenden (15) etwa 1/6 des Flankenwinkels (β) zwischen Lastflanke (8) und Rückflanke (9) beträgt.

4. Schraube aus Stahl nach einem der Ansprüche 1 bis 3 zum Eindrehen in Stahl, **dadurch gekennzeichnet, daß** der zwischen Lastflanke (8) und Rückflanke (9) gemessene Flankenwinkel (β) 38° - 48° beträgt.

5. Schraube aus Stahl nach einem der Ansprüche 1 bis 3 zum Eindrehen in Leichtmetall, **dadurch gekennzeichnet, daß** der zwischen Lastflanke (8) und Rückflanke (9) gemessene Flankenwinkel (β) 32° - 42° beträgt.

6. Schraube aus Aluminium nach einem der Ansprüche 1 bis 3 zum Eindrehen in Leichtmetall, **dadurch gekennzeichnet, daß** der zwischen Lastflanke (8) und Rückflanke (9) gemessene Flankenwinkel (β) 58° - 68° beträgt.

## Claims

1. Thread-forming screw with rolled thread turns (4), in which the load flank (8) and the rear flank (9) extend asymmetrically relative to one another in such a manner that the load flank (8) extends in a straight line to the root (11) of the thread and the rear flank (9) initially extends in a straight line from the crest (10) of the thread and from approximately 1/3 of its height verges via a bend (12) into a straight angled portion (13) at an angle (α), **characterised in that** the angle (α) of the angled portion is greater than the angle (δ) of the rear flank (9) measured relative to the perpendicular (5) and is between 30° and 50° and the angle bisector (15) of the thread turn (4) formed by the load flank (8) and the rear flank (9) is inclined away from the screw head (1) relative to the perpendicular (5) to the screw axis (6), the ratio of the core diameter (K) of the thread to the outer diameter (D) of the thread being greater than 0.7 and the ratio of the thread pitch (P) to the outer diameter (D) of the thread being less than 0.25.

2. Screw according to claim 1, **characterised in that** the inclination (ε) of the angle bisector (15) is in the range between 5° and 15°.

3. Screw according to claim 2, **characterised in that** the inclination (ε) of the angle bisector (15) is approximately 1/6 of the thread angle (β) between the load flank (8) and the rear flank (9).

4. Steel screw according to one of claims 1 to 3 for screwing into steel, **characterised in that** the thread angle (β) measured between the load flank (8) and the rear flank (9) is 38°-48°.

5. Steel screw according to one of claims 1 to 3 for screwing into light metal, **characterised in that** the thread angle (β) measured between the load flank (8) and the rear flank (9) is 32°-42°.

6. Aluminium screw according to one of claims 1 to 3 for screwing into light metal, **characterised in that** the thread angle (β) measured between the load flank (8) and the rear flank (9) is 58°-68°.

## Revendications

1. Vis autotaraudeuse comportant des pas de vis (4) roulés, dans le cas de laquelle le flanc de charge (8) et le flanc arrière (9) s'étendent de façon dissymétrique l'un par rapport à l'autre de telle sorte que le flanc de charge (8) s'étende de manière rectiligne vers le fond (11) du filet, et que le flanc arrière (9) s'étende d'abord de façon rectiligne à partir du sommet (10) du filet, et se transforme à partir du 1/3 environ de sa hauteur en un chanfrein droit (13) d'un angle (α) par l'intermédiaire d'une cassure (12), **caractérisée en ce que** l'angle (α) du chanfrein est plus important que l'angle (δ) du flanc arrière (9) mesuré par rapport à la verticale (5), et se situe entre 30° et 50°, et **en ce que**, par rapport à l'axe de vis (6), la bissectrice d'angle (15) du pas de vis (4) formé par le flanc de charge (8) et le flanc arrière (9) présente une position oblique orientée à l'opposé de la tête de vis (1) par rapport à la verticale (5), le rapport entre le diamètre du noyau (K) du filetage et le diamètre extérieur (D) du filetage étant supérieur à 0,7, et le rapport entre le pas de vis (P) et le diamètre extérieur (D) du filetage étant inférieur à 0,25.

2. Vis selon la revendication 1, **caractérisée en ce que** la position oblique (ε) de la bissectrice d'angle (15) se situe dans la plage comprise entre 5° et 15°.

3. Vis selon la revendication 2, **caractérisée en ce que** la position oblique (ε) de la bissectrice d'angle (15) est d'environ 1/6 de l'angle de flanc (β) entre le flanc de charge (8) et le flanc arrière (9).

4. Vis en acier selon l'une quelconque des revendications 1 à 3 destinée à être vissée dans de l'acier, **caractérisée en ce que** l'angle (β) mesuré entre le flanc de charge (8) et le flanc arrière (9) est de 38° à 48°.

5. Vis en acier selon l'une quelconque des revendications 1 à 3 destinée à être vissée dans du métal léger, **caractérisée en ce que** l'angle (β) mesuré entre le flanc de charge (8) et le flanc arrière (9) est de 32° à 42°.

6. Vis en aluminium selon l'une quelconque des revendications 1 à 3 destinée à être vissée dans du métal léger, **caractérisée en ce que** l'angle (β) mesuré entre le flanc de charge (8) et le flanc arrière (9) est de 58° à 68°.
